# EUROPÄISCHE PATENTANMELDUNG

(11) **EP 4 556 427 A1**
(43) Veröffentlichungstag der Anmeldung: **21.05.2025**
(21) Anmeldenummer: 24212114.3
(22) Anmeldetag: 11.11.2024
(51) Int. Cl.: B66C 13/12, B66C 13/14, B66C 23/84, E02F 9/12, F03D 1/00, F03D 80/80

(54) **VORRICHTUNG MIT EINER DREHVERBINDUNG**

(30) Priorität: 14.11.2023 DE 102023131652
(71) Anmelder: Liebherr-Hydraulikbagger GmbH, 88457 Kirchdorf/Iller (DE)
(72) Erfinder: SCHICK, Marcel, 87700 Memmingen (DE); GRABMAIER, Stefan, 86842 Türkheim (DE); MUELLER, Manuel, 89275 Elchingen (DE); PISTNER, Sandra, 87700 Memmingen (DE); SCHNEIDER, Markus, 88457 Kirchdorf (DE)
(74) Vertreter: Laufhütte, Dieter

(57) **Zusammenfassung**

Die Erfindung betrifft eine Vorrichtung umfassend eine Drehverbindung (10), eine Unterkonstruktion (12) und eine über die Drehverbindung (10) um eine Rotationsachse (13) drehbar mit der Unterkonstruktion (12) verbundene Oberkonstruktion (14). Die Drehverbindung (10) umfasst eine Schleifringanordnung (20) mit einem Rotor (17) und einem Stator (18) zum Übertragen von elektrischer Energie. Die Unterkonstruktion (12) und die Oberkonstruktion (14) umfassen jeweils mindestens eine elektrische Komponente, welche über die Schleifringanordnung (20) elektrisch miteinander verbunden sind. Erfindungsgemäß erfolgt die Führung und Lagerung von Rotor (17) und Stator (18) zueinander über ein Lager (16) der Drehverbindung (10), welches außerhalb der Schleifringanordnung (20) angeordnet ist.

## Beschreibung

Die vorliegende Erfindung betrifft eine Vorrichtung gemäß dem Oberbegriff des Anspruchs 1.

Bei einer Vielzahl technischer Anlagen und Arbeitsmaschinen wie z.B. Windkraftanlagen, Kabelwickelsysteme, Hubrettungs- bzw. Drehleiterfahrzeugen, Turmdreh- und Mobilkranen, Tiefbaugeräten oder Baggern sind Komponenten über Drehverbindungen zueinander drehbar gelagert und in der Regel über Drehantriebe aktiv rotierbar. Bei mobilen Arbeitsmaschinen wie Mobilkranen, Tiefbaugeräten oder Baggern weisen die Geräte meist einen fahrbaren Unterwagen und einen um eine vertikale Drehachse drehbar auf dem Unterwagen gelagerten Oberwagen auf, an welchem die jeweilige Arbeitsausrüstung (Ausleger, Mast, Baggerstil etc.) befestigt ist.

All diesen Vorrichtungen ist gemeinsam, dass sich in den letzten Jahren der Trend verstärkt in Richtung Elektrifizierung dieser Maschinen entwickelt hat, um den CO₂-Ausstoß zu senken und die Energiesicherheit zu erhöhen, und daher elektrische Verbindungen zwischen elektrischen Einrichtungen (Verbrauchern, Energiequellen) in den drehbar zueinander gelagerten Komponenten über die jeweiligen Drehverbindungen erforderlich sind. Derartige elektrische Drehverbindungen werden üblicherweise über Schleifringe bereitgestellt, die zwei zueinander bewegliche Komponenten (Rotor / Stator) umfassen. An bzw. in einer der beweglichen Komponenten (z.B. Rotor) befinden sich eine oder mehrere Leiterbahnen und an bzw. in der anderen beweglichen Komponente (z.B. Stator) befinden sich die Leiterbahnen kontaktierende Schleifkontakte. Aufgrund der physischen Kontaktierung der Leiterbahnen durch die typischerweise mittels Federn vorgespannten Schleifkontakte wird unabhängig vom Drehwinkel eine elektrische Verbindung bereitgestellt. Die Schleifringe sind aus Platzgründen üblicherweise im Bereich bzw. innerhalb der Drehverbindung verbaut. Um den Kraftfluss und die Führung von Rotor und Stator zu ermöglichen, ist bei bekannten Vorrichtungen zusätzlich eine Lagerung in den Schleifring integriert, z.B. in Form eines Wälzlagers.

Bei bekannten Konstruktionen sind also mindestens zwei Lager verbaut: ein Lager des Schleifrings, welches dessen Rotor und Stator zueinander führt und lagert, und mindestens ein Lager der Drehverbindung, welches die Oberkonstruktion und die Unterkonstruktion zueinander lagert und führt. Dadurch lässt sich die Schleifringanordnung zusammengesetzt in die Drehverbindung einbauen. Das Lager innerhalb des Schleifrings lagert dabei nicht die Oberkonstruktion zur Unterkonstruktion, sondern Schleifringstator und -rotor. Der Schleifringstator ist dabei typischerweise mit der Unterkonstruktion verbunden, während der Schleifringrotor nur über Mitnehmer in die Oberkonstruktion eingreift. Das Lager des Schleifrings dient bei bekannten Vorrichtungen somit nur der Übertragung der Drehbewegung und nicht der sonstigen Kraftübertragung bzw. Lagerung.

Bei mobilen Arbeitsmaschinen befindet sich im fahrbaren Unterwagen üblicherweise ein Fahrantrieb und häufig auch ein Achsverteilergetriebe (insbesondere bei Unterwagen mit Radfahrwerk). Durch die bauartbedingte Ausdehnung der Schleifringe in Richtung der Rotationsachsen der Drehverbindungen steht für die genannten Komponenten unterhalb der Schleifringe nur ein begrenzter Bauraum zur Verfügung.

Der vorliegenden Erfindung liegt daher die Aufgabe zugrunde, eine platzsparende Drehverbindung mit Schleifringübertragung bereitzustellen.

Erfindungsgemäß wird diese Aufgabe durch eine Vorrichtung mit den Merkmalen des Anspruchs 1 gelöst. Vorteilhafte Ausführungsformen der Erfindung ergeben sich aus den Unteransprüchen und der nachfolgenden Beschreibung.

Demnach wird eine Vorrichtung vorgeschlagen, welche eine Drehverbindung, eine Unterkonstruktion und eine über die Drehverbindung um eine Rotationsachse drehbar mit der Unterkonstruktion verbundene Oberkonstruktion umfasst. Bei der Unterkonstruktion kann es sich um einen stationären, schwimmfähigen oder fahrbaren Unterwagen, einen Turm (z.B. einen Turm einer Windkraftanlage oder einen Kranturm) oder eine beliebige andere Konstruktion handeln. Bei der Oberkonstruktion kann es sich um einen Oberwagen, einen Kranausleger eines Turmdrehkrans, eine Gondel einer Windkraftanlage oder eine beliebige andere relativ zur Unterkonstruktion drehbare Konstruktion handeln.

Die Drehverbindung umfasst eine Schleifringanordnung zum Übertragen von elektrischer Energie und/oder elektrischen Signalen, wobei die Schleifringanordnung einen Rotor und einen Stator umfasst, die relativ zueinander drehbar sind. Bei einer Drehung der Oberkonstruktion relativ zur Unterkonstruktion über die Drehverbindung drehen sich Rotor und Stator der Schleifringanordnung vorzugsweise ebenfalls zueinander, insbesondere mit derselben relativen Winkelgeschwindigkeit wie die Ober-und Unterkonstruktion. Die Begriffe "Rotor" und "Stator" sind vorliegend nicht einschränkend auszulegen und bedeuten beispielsweise nicht zwingend, dass der Stator mit einer statischen Komponente (z.B. einer statischen Unterkonstruktion) der Vorrichtung verbunden ist.

Die Unterkonstruktion und die Oberkonstruktion umfassen ferner jeweils mindestens eine elektrische Komponente, wobei die elektrischen Komponenten über die Schleifringanordnung elektrisch, d.h. leitend miteinander verbunden sind. Unter einer elektrischen Komponente kann vorliegend unter anderem ein beliebiger elektrischer Verbraucher (z.B. ein Elektromotor, ein elektrischer Aktuator oder ein Niederspannungsbordnetz), eine beliebige elektrische Energiequelle (z.B. ein Solar- oder Windkraftwerk, ein Verbrennungsmotor mit nachgeschaltetem Generator oder eine Brennstoffzelle) oder ein elektrischer Energiespeicher verstanden werden.

Erfindungsgemäß ist die Drehverbindung so aufgebaut, dass die Führung und die Lagerung des Rotors und des Stators zueinander über ein Lager der Drehverbindung erfolgt, welches außerhalb der Schleifringanordnung angeordnet ist. Das Lager dient neben der Führung insbesondere der Bereitstellung eines definierten Kraftflusses zwischen den über die Drehverbindung miteinander verbundenen Komponenten.

Ein Grundgedanke der vorliegenden Erfindung besteht darin, die Bauhöhe der Drehverbindung und insbesondere der Schleifringanordnung in axialer Richtung (d.h. parallel zur Rotationsachse der Drehverbindung) zu verringern, indem das Lager zur Führung und Lagerung von Rotor und Stator nicht in die Schleifringanordnung integriert ist, sondern außerhalb von dieser angeordnet ist. Dies ist insbesondere bei mobilen Baumaschinen von Vorteil, bei denen unterhalb der Drehverbindung nur ein begrenzter Bauraum für den Fahrmotor und etwaige Getriebe zur Verfügung steht. Darüber hinaus führt die Verlagerung des Lagers zu einem weniger komplexen und/oder einem kostenreduzierten Aufbau.

Erfindungsgemäß wird also zur Führung und Lagerung von Rotor und Stator nicht auf ein integriertes Lager der Schleifringanordnung zurückgegriffen, sondern es wird insbesondere ein Lager der Drehverbindung, welches die Oberkonstruktion drehbar zur Unterkonstruktion lagert, für die Lagerung von Schleifringstator und -rotor "mitbenutzt" bzw. indirekt mitgelagert. Dadurch kann das bisherige Lager in der Schleifringanordnung entfallen. Der Rotor kann hierzu nun fest, d.h. rotationsstarr mit der Oberkonstruktion verbunden (und nicht nur über Mitnehmer gekoppelt) werden.

Das genannte, außerhalb der Schleifringanordnung sitzende Lager kann generell als Wälzlager ausgebildet sein, beispielsweise als Kugellager. Alternativ kann das Lager als Zylinder- oder Kegellager ausgebildet sein. Das Lager kann eine oder mehrere Wälzkörperreihen umfassen (z.B. eine oder mehrere Axiallagerreihen und/oder eine oder mehrere Radiallagerreihen), wobei hierbei auch Kombinationen aus Kugel-, Zylinder- und/oder Kegellagerreihen denkbar sind.

Die Schleifringanordnung kann neben der Übertragung von elektrischer Energie auch für eine Übertragung elektrischer Signale, beispielsweise Steuersignale, ausgebildet sein.

In einer möglichen Ausführungsform ist vorgesehen, dass das Lager in Bezug auf die Rotationsachse radial außerhalb der Schleifringanordnung angeordnet ist. Damit trägt das Lager insbesondere zur Ausdehnung der Drehverbindung senkrecht zur Rotationsachse (radiale Richtung) bei, während sich der Bauraum in axialer Richtung verringert. Vorzugsweise umgibt das Lager die Schleifringanordnung teilweise oder vollständig. Insbesondere kann es sich bei dem Lager um ein Wälzlager handeln, welches die Schleifringanordnung mit Blick entlang der Rotationsachse ringförmig umgibt. Das Lager kann sich auf axialer Höhe der Schleifringanordnung oder beispielsweise "über" der Schleifringanordnung befinden.

In einer weiteren möglichen Ausführungsform ist vorgesehen, dass die Drehverbindung einen Drehkranz, insbesondere Kugeldrehkranz, umfasst, welcher das Lager bildet, wobei die Schleifringanordnung insbesondere zumindest teilweise innerhalb des Drehkranzes angeordnet ist. Der Drehkranz kann sich auf axialer Höhe der Schleifringanordnung befinden.

Das Lager umfasst vorzugsweise ein mit der Oberkonstruktion verbundenes erstes Lagerteil und ein mit der Unterkonstruktion verbundenes zweites Lagerteil. Bei den genannten Lagerteilen kann es sich insbesondere um Lagerringe eines Wälzlagers bzw. Kugeldrehkranzes handeln, zwischen denen eine oder mehrere Wälzkörperreihen angeordnet sein können. Die ersten und zweiten Lagerteile sind dabei insbesondere nicht direkt mit Rotor und Stator der Schleifringanordnung, sondern vorzugsweise direkt mit Ober- und Unterkonstruktion verbunden. Die Relativbewegung von Rotor und Stator erfolgt dann synchron mit der Relativbewegung von Ober- und Unterkonstruktion.

In einer weiteren möglichen Ausführungsform ist vorgesehen, dass die Schleifringanordnung kein eigenes Lager umfasst. Die Führung und Kraftübertragung zwischen den beweglichen Komponenten findet also vorzugsweise ausschließlich außerhalb der Schleifringanordnung statt. Hierbei wird insbesondere ein zur Lagerung und Führung von Ober- und Unterkonstruktion verwendetes Lager "mitbenutzt", welches damit eine Doppelfunktion übernimmt.

Alternativ oder zusätzlich kann vorgesehen sein, dass die Drehverbindung neben dem außerhalb der Schleifringanordnung angeordneten Lager kein weiteres Lager umfasst, d.h. dass die Drehverbindung nur ein einziges Lager umfasst, welches zum einen Ober- und Unterkonstruktion und zum anderen Schleifringrotor und -stator zueinander lagert. Alternativ kann die Drehverbindung mehrere Lager umfassen, welche aber alle außerhalb der Schleifringanordnung angeordnet sind.

In einer weiteren möglichen Ausführungsform ist vorgesehen, dass der Rotor mit der Oberkonstruktion und der Stator mit der Unterkonstruktion verbunden ist. Der umgekehrte Fall ist prinzipiell ebenfalls denkbar. Vorzugsweise ist der Rotor fest (und somit rotationsstarr) mit der Oberkonstruktion und/oder der Stator fest (und somit rotationsstarr) mit der Unterkonstruktion verbunden. Auch hier ist der umgekehrte Fall denkbar.

In einer weiteren möglichen Ausführungsform ist vorgesehen, dass der Rotor mindestens zwei Leiterbahnen und der Stator mindestens zwei Schleifkontakte umfasst, wobei die Leiterbahnen jeweils von einem Schleifkontakt kontaktiert werden. Alternativ kann der Stator die mindestens zwei Leiterbahnen und der Rotor die mindestens zwei Schleifkontakte umfassen. Durch den physischen Kontakt zwischen Leiterbahnen und Schleifkontakten wird eine elektrisch leitende Verbindung hergestellt, wobei die Schleifkontakte vorzugsweise über Federeinrichtungen gegen die Leiterbahnen gedrückt werden bzw. vorgespannt sind. Die Federeinrichtungen können im einfachsten Fall Federn umfassen bzw. darstellen. Vorzugsweise umfasst die Schleifringanordnung drei Leiterbahnen und entsprechend drei Schleifkontakte. Die Leiterbahnen verlaufen insbesondere konzentrisch und vorzugsweise ohne Unterbrechungen um die Rotationsachse.

Vorzugsweise ergibt sich generell eine stabile, elektrisch leitende Verbindung über den vollen Drehbereich der Drehverbindung (insbesondere 360°).

In einer weiteren möglichen Ausführungsform ist vorgesehen, dass mindestens zwei Leiterbahnen in Bezug auf die Rotationsachse radial nebeneinander angeordnet sind. Vorzugsweise sind alle Leiterbahnen in Bezug auf die Rotationsachse radial nebeneinander angeordnet. Im Unterschied zu bekannten Schleifringen, bei denen die Leiterbahnen und zugehörigen Schleifringkörper axial untereinander angeordnet sind, ergibt sich dadurch (neben dem Entfall des in die Schleifringanordnung integrierten Lagers) eine zusätzliche Verringerung des axialen Bauraums der erfindungsgemäßen Drehverbindung. Die Leiterbahnen verlaufen insbesondere konzentrisch und vorzugsweise ohne Unterbrechungen um die Rotationsachse, besitzen aber unterschiedliche Durchmesser. Die mindestens zwei Leiterbahnen, vorzugsweise alle Leiterbahnen, liegen insbesondere in einer gemeinsamen Ebene, welche senkrecht von der Rotationsachse geschnitten wird, wobei das Lager vorzugsweise parallel zu dieser Ebene verläuft.

Bei mehr als zwei Leiterbahnen können diese beispielsweise auch abwechselnd auf unterschiedlichen Ebenen angeordnet sein, beispielsweise auf zwei in Richtung der Rotationsachse voneinander beabstandeten, parallelen Ebenen (d.h. Anordnung der Leiterbahnen von innen nach außen: oben, unten, oben oder unten, oben, unten usw.). Dadurch würde sich ebenfalls eine Verringerung der axialen Höhe der Schleifringanordnung ergeben, wobei die Leiterbahnen einen größeren Abstand zueinander und somit eine bessere Isolierung hätten.

Die Schleifkontakte befinden sich vorzugsweise auf derselben Seite in Bezug auf die Leiterbahnen, insbesondere auf der der Oberkonstruktion zugewandten Seite. Bei abwechselnd auf unterschiedlichen Ebenen liegenden Leiterbahnen können die Schleifkontakte ebenfalls abwechselnd auf unterschiedlichen Seiten sitzen.

Durch die radial nebeneinander angeordneten Leiterbahnen und Schleifkontakte ergibt sich neben einer weiteren Bauraumreduktion der Drehverbindung bzw. der Schleifringanordnung zusätzlich der Vorteil einer einfacheren und schonenderen Montage, da die Schleifkontakte nachträglich nach dem Zusammenführen von Ober-und Unterkonstruktion eingebaut und/oder eingestellt werden können, z.B. von der Oberkonstruktion aus.

In einer weiteren möglichen Ausführungsform ist vorgesehen, dass die Drehverbindung mindestens eine hydraulische Drehdurchführung umfasst, durch welche Hydraulikfluid von der Ober- in die Unterkonstruktion und/oder von der Unter- in die Oberkonstruktion geleitet werden kann, z.B. um einen in der Oberkonstruktion angeordneten hydraulischen Verbraucher wie einen Hydraulikzylinder oder Hydraulikmotor mit Hydraulikfluid aus der Unterkonstruktion und/oder um einen in der Unterkonstruktion angeordneten hydraulischen Verbraucher wie einen hydraulischen Fahrmotor oder Drehwerkantrieb mit Hydraulikfluid aus der Oberkonstruktion zu versorgen. Bei den Volumenströmen durch die hydraulische Drehdurchführung kann es sich auch um Rückflüsse von Verbrauchern handeln.

Für den Anschluss eines entsprechenden Hydraulikschlauchs bzw. entsprechender Hydraulikschläuche umfasst die Drehverbindung vorzugsweise mindestens einen Hydraulikanschluss, welcher insbesondere an einer der Unterkonstruktion zugewandten Seite der Drehverbindung angeordnet ist. Durch die reduzierte axiale Ausdehnung der Drehverbindung bzw. der Schleifringanordnung steht an dieser Stelle ausreichend Platz für einen angeschlossenen hydraulischen Verbraucher, beispielsweise einen Hydraulikmotor, zur Verfügung.

In einer weiteren möglichen Ausführungsform ist vorgesehen, dass die Vorrichtung eine in der Unterkonstruktion und/oder in der Oberkonstruktion angeordnete Energiequelle umfasst, deren erzeugte Energie über die Schleifringanordnung übertragbar ist. Bei der Energiequelle kann es sich um eine Primärenergiequelle handeln. Die Energiequelle umfasst vorzugsweise einen Verbrennungsmotor mit nachgeschaltetem Generator und/oder eine Brennstoffzelle und/oder einen Anschluss für eine externe Energiequelle (z.B. einen externen Generator, einen externen Energiespeicher oder ein externes Stromnetz). Die Vorrichtung kann mehrere Energiequellen umfassen, die sich alle in der Oberkonstruktion, alle in der Unterkonstruktion oder verteilt sowohl in der Unterkonstruktion als auch in der Oberkonstruktion befinden können. Die jeweiligen Energieflüsse zu den entsprechenden elektrischen Verbrauchern der Vorrichtung werden zumindest teilweise über die Schleifringanordnung geleitet.

In einer weiteren möglichen Ausführungsform ist vorgesehen, dass die Vorrichtung mindestens einen in der Unterkonstruktion und/oder in der Oberkonstruktion angeordneten Energiespeicher umfasst, welchem elektrische Energie über die Schleifringanordnung bereitstellbar ist, beispielsweise von einer Energiequelle oder einem anderen Energiespeicher. Auch der umgekehrte Fall ist denkbar, wobei ein Energiespeicher elektrischen Verbrauchern Energie über die Schleifringanordnung bereitstellt.

Alternativ oder zusätzlich kann die Vorrichtung ein Gleichspannungsversorgungsnetz bzw. DC-Versorgungsnetz umfassen, welches sich über die Schleifringanordnung zwischen Unter- und Oberkonstruktion erstreckt.

In einer weiteren möglichen Ausführungsform ist vorgesehen, dass die Drehverbindung einen insbesondere hydraulischen Drehantrieb umfasst, mittels welchem die Oberkonstruktion relativ zur Unterkonstruktion aktiv drehbar ist. Der Drehantrieb kann an der Unterkonstruktion angeordnet sein, wobei auch eine Anordnung an der Oberkonstruktion denkbar ist. Vorzugsweise ist der Drehantrieb elektrisch oder hydraulisch über die Drehverbindung versorgbar, von einer entsprechenden elektrischen Quelle (z.B. Primärenergiequelle oder Energiespeicher) oder hydraulischen Quelle (z.B. Hydraulikpumpe bzw. Pumpenverteilergetriebe).

In einer weiteren möglichen Ausführungsform ist vorgesehen, dass die Vorrichtung eine Arbeitsmaschine ist. Hierbei kann es sich um eine stationäre Arbeitsmaschine (z.B. einen Turmdrehkran) oder eine fahrbare bzw. mobile Arbeitsmaschine (z.B. einen Mobilkran, Schiffskran, Schienenkran, Seilbagger, Hydraulikbagger, eine Drehbohranlage, Schlitzwandfräse, Vibrationsramme, einen Schalengreifer, ein Einsatzfahrzeug mit Drehleiter oder ein Hubrettungsfahrzeug (z.B. der Feuerwehr) handeln. Vorzugsweise ist die Rotationsachse vertikal ausgerichtet (dies betrifft den Fall, dass die Arbeitsmaschine gerade auf einem ebenen, horizontalen Untergrund steht).

In einer weiteren möglichen Ausführungsform ist vorgesehen, dass es sich bei der Vorrichtung um eine mobile Arbeitsmaschine, insbesondere einen Mobilkran, einen Bagger oder ein Tiefbaugerät, handelt, wobei die Unterkonstruktion als fahrbarer Unterwagen und die Oberkonstruktion als Oberwagen mit einer daran befestigten Arbeitsausrüstung, insbesondere einem Ausleger, einem Mast oder einem Baggerstil, ausgebildet ist.

In einer weiteren möglichen Ausführungsform ist vorgesehen, dass der Unterwagen einen Fahrmotor und vorzugsweise ein Achsverteilergetriebe umfasst, wobei der Fahrmotor und/oder das Achsverteilergetriebe unterhalb der Drehverbindung, insbesondere unterhalb der Schleifringanordnung, angeordnet ist. Bei dem Fahrmotor kann es sich um einen hydraulischen Fahrmotor handeln, der insbesondere über eine hydraulische Drehverbindung mit Hydrauliköl versorgbar ist. Durch die geringere axiale Ausdehnung der Drehverbindung bzw. der Schleifringanordnung steht hierfür ausreichend Bauraum zur Verfügung.

In einer weiteren möglichen Ausführungsform ist vorgesehen, dass es sich bei der Vorrichtung um eine Windkraftanlage handelt, wobei die Oberkonstruktion als Gondel und die Unterkonstruktion als Turm ausgebildet sind.

Ebenfalls sind andere Ausgestaltungen der erfindungsgemäßen Vorrichtung denkbar, beispielsweise als Kabelwickelsystem.

Weitere Merkmale, Einzelheiten und Vorteile der Erfindung ergeben sich aus den nachfolgend anhand der Figuren erläuterten Ausführungsbeispielen. Es zeigen:
- Figur 1:: eine aus dem Stand der Technik bekannte Drehverbindung mit Schleifring in einer seitlichen Schnittansicht;
- Figur 2:: die Drehverbindung gemäß einem ersten Ausführungsbeispiel der erfindungsgemäßen Vorrichtung in einer seitlichen Schnittansicht; und
- Figur 3:: die Drehverbindung gemäß einem zweiten Ausführungsbeispiel der erfindungsgemäßen Vorrichtung in einer seitlichen Schnittansicht.

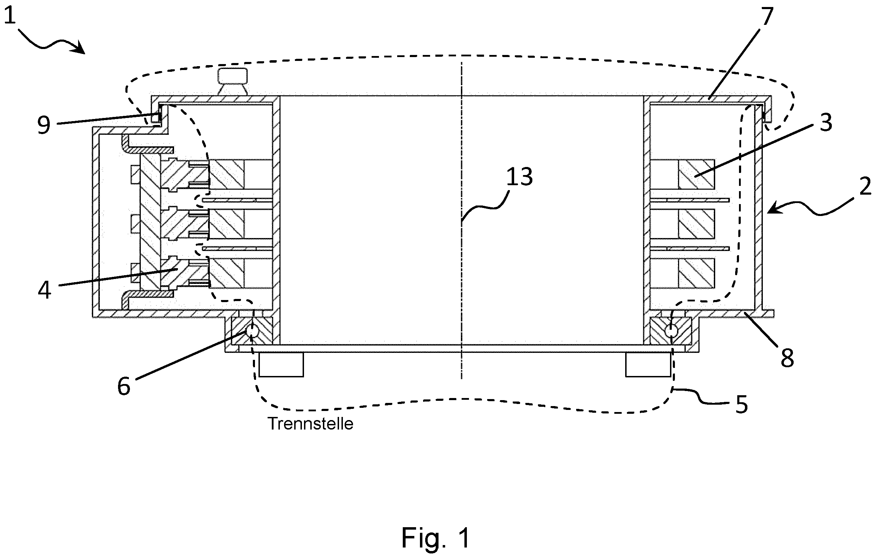

Die Figur 1 zeigt ein Beispiel einer Schleifringanordnung 2 einer aus dem Stand der Technik bekannten Drehverbindung 1 als Schnitt entlang der Rotationsachse 13 der Drehverbindung 1 bzw. der Schleifringanordnung 2. Die Schleifringanordnung 2 umfasst einen Rotor 7 und einen Stator 8, die gegeneinander um die Rotationsachse 13 drehbar gelagert sind. Die Schleifringanordnung 2 umfasst drei Leiterbahnen 3, die konzentrisch um die Rotationsachse 13 und untereinander (d.h. in axialer Richtung entlang der Rotationsachse 13) angeordnet sind. Die Leiterbahnen 3 sind am Rotor 7 angeordnet und drehen sich mit diesem mit. Drei Schleifkontakte 4 werden über Federn gegen die Leiterbahnen 3 gedrückt, sodass bei jedem Drehwinkel des Rotors 7 relativ zum Stator 8 elektrische Kontakte bestehen. Die Schleifkontakte 4 sind korrespondierend zu den Leiterbahnen 3 untereinander angeordnet und mit dem Stator 8 verbunden.

Die Drehverbindung 1 verbindet eine nicht dargestellte Oberkonstruktion drehbar mit einer ebenfalls nicht dargestellten Unterkonstruktion, z.B. einen Kranoberwagen mit einem Kranunterwagen. Der Stator 8 ist dabei üblicherweise direkt mit der Unterkonstruktion verbunden, während der Rotor 7 über Mitnehmer in die Oberkonstruktion eingreift (reine Übertragung der Drehbewegung von der Oberkonstruktion auf den Rotor 7).

Zur Führung des Rotors 7 im Stator 8 ist ein Lager 6 in Form eines konzentrisch um die Rotationsachse 13 umlaufenden Kugellagers 6 in die Schleifringanordnung 2 unterhalb der Leiterbahnen 3 integriert. Die Trennstelle 5 der so ausgebildeten Schleifringanordnung 2 zwischen den relativ zueinander drehbaren Komponenten (einerseits der Stator 8, die Schleifkontakte 4 und der mit dem Stator 8 verbundene Teil des Lagers 6; andererseits der Rotor 7, die Leiterbahnen 3 und der mit dem Rotor 7 verbundene Teil des Lagers 6) ist durch eine gestrichelte Linie 5 angedeutet. In der Figur 1 ist ebenfalls eine konzentrisch umlaufende Dichtung 9 zu erkennen, welche den Rotor 7 gegenüber dem Stator 8 abdichtet und in dem gezeigten Beispiel als Spaltdichtung ausgebildet ist.

Diese bekannte Anordnung weist eine beträchtliche axiale Ausdehnung auf, insbesondere aufgrund der entlang der Rotationsachse 13 "untereinander" angeordneten Leiterbahn-Schleifkontakt-Paare 3, 4 und des "darunter" als Teil der Schleifringanordnung 2 angeordneten Lagers 6.

Um die axiale Ausdehnung der Schleifringanordnung und somit der Drehverbindung zu reduzieren, entfällt erfindungsgemäß das Lager in der Schleifringanordnung. Mit anderen Worten weist die Schleifringanordnung keine eigene Lagerung für Rotor und Stator auf. Der Rotor und der Stator sind stattdessen über ein außerhalb der Schleifringanordnung angeordnetes Lager gelagert und geführt. Dabei können Rotor und Stator insbesondere über ein außerhalb der Schleifringanordnung sitzendes Lager der Drehverbindung, welches der Lagerung und Führung von Ober- und Unterkonstruktion dient, "mitgelagert" werden.

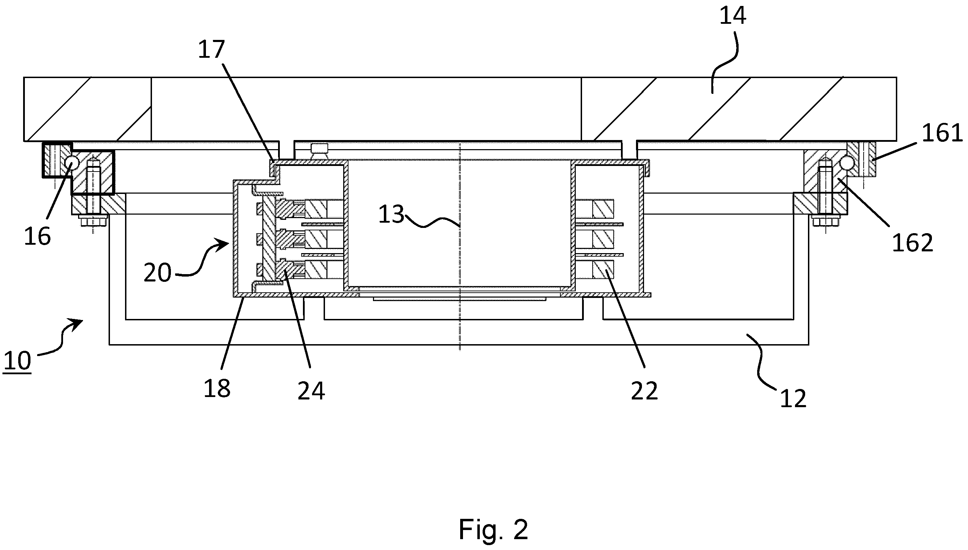

Ein erstes Ausführungsbeispiel der erfindungsgemäßen Vorrichtung mit einer solchen Drehverbindung 10 ist in der Figur 2 gezeigt, wiederum als Schnitt entlang der Rotationsachse 13. Die Drehverbindung 10 umfasst eine Schleifringanordnung 20 mit einem Rotor 17 und einem Stator 18, welche relativ zueinander um die Rotationsachse 13 drehbar gelagert sind. Bei dem hier betrachteten Ausführungsbeispiel ist der Rotor 17 mit einem Oberwagen 14 (= Oberkonstruktion) und der Stator 18 mit einem Unterwagen 12 (= Unterkonstruktion) einer Arbeitsmaschine fest verbunden, wobei Oberwagen 14 und Unterwagen 12 nur schematisch dargestellt und deren Verbindungen mit den verschiedenen Komponenten der Drehverbindung 10 über entsprechende vertikale Balken illustriert sind. Die Rotationsachse 13 verläuft in diesem Ausführungsbeispiel vertikal, sodass der Oberwagen 14 tatsächlich "oberhalb" des Unterwagens 12 sitzt. Prinzipiell kann die erfindungsgemäße Drehverbindung 10 aber in jeder beliebigen Orientierung in der Vorrichtung verbaut sein.

Bei dem gezeigten Ausführungsbeispiel umfasst der Rotor 17 der Schleifringanordnung 20 drei Leiterbahnen 22 und der Stator weist drei die Leiterbahnen 22 kontaktierende Schleifkontakte 24 auf (der umgekehrte Fall ist selbstverständlich ebenfalls möglich), wobei die Schleifkontakte 24 insbesondere über Federelemente gegen die Leiterbahnen 22 gedrückt werden. Die drei Leiterbahnen 22 und die drei Schleifkontakte 24 sind, ähnlich wie bei der Vorrichtung der Figur 1, untereinander angeordnet. Die Ausführungen zur Funktionsweise der Schleifringanordnung der Vorrichtung gemäß Figur 1 gelten entsprechend. Die Drehverbindung 10 und/oder die Schleifringanordnung 20 kann optional ebenfalls eine Dichtung 9 (z.B. Spaltdichtung und/oder Dichtlippe) aufweisen (nicht gezeigt). Ebenfalls ist eine berührungslose Dichtung bzw. Spaltdichtung denkbar, wie dies in der Figur 2 gezeigt ist, was eine kostengünstige Dichtungsvariante darstellt.

Im Gegensatz zu bekannten Vorrichtungen wie beispielsweise derjenigen der Figur 1 umfasst die Schleifringanordnung 20 selbst kein eigenes Lager zur Führung und Lagerung von Rotor 17 und Stator 18. Stattdessen werden Rotor 17 und Stator 18 über ein Lager 16 der Drehverbindung 10 gelagert und geführt, welches radial außerhalb der Schleifringanordnung 20 sitzt. Dieses übernimmt einerseits die Führung und Kraftübertragung zwischen Oberwagen 14 und Unterwagen 12 und gleichzeitig die Führung und Kraftübertragung zwischen Rotor 17 und Stator 18 (Doppelfunktion). Bei dem gezeigten Ausführungsbeispiel ist neben dem einzigen Lager 16 kein weiteres Lager der Drehverbindung 10 vorgesehen.

Bei dem gezeigten Ausführungsbeispiel ist das Lager 16 in Form eines Kugeldrehkranzes radial außerhalb der Schleifringanordnung 20 angeordnet, d.h. das Lager 16 besitzt einen größeren Durchmesser als die Schleifringanordnung 20 und ist insbesondere konzentrisch zur Rotationsachse 13 angeordnet.

Das Lager 16 kann sich, wie hier gezeigt, auf Höhe der Schleifringanordnung 20 befinden und umgibt diese vollständig. Über den Kugeldrehkranz 16 wird der Oberwagen 14 am Unterwagen 12 drehbar gelagert. Dadurch, dass das separate Lager der Schleifringanordnung 20 entfällt, wird das Drehkranzlager bzw. der Kugeldrehkranz 16 der Drehverbindung 10 für die Führung und Kraftübertragung von Rotor 17 und Stator 18 mitgenutzt. Dadurch reduziert sich die Bauhöhe der Schleifringanordnung 20 und somit insgesamt der Drehverbindung 10. Zudem führt das Entfallen einer in die Schleifringanordnung 20 integrierten Lagerung zu einer Kostenreduktion der Drehverbindung 10.

Das Lager 16 umfasst im gezeigten Ausführungsbeispiel eine erste Lagerkomponente 161 in Form eines ersten Lagerrings, welcher mit dem Oberwagen 14 verschraubt ist, und eine zweite Lagerkomponente 162 in Form eines zweiten Lagerrings, welcher mit dem Unterwagen 12 verschraubt ist. Zwischen in den Lagerringen ausgebildeten Laufflächen ist im gezeigten Ausführungsbeispiel eine Wälzlagerreihe angeordnet, wobei hier beliebig komplexe Wälzlager (z.B. mit einer oder mehreren Axiallagerreihen und/oder einer oder mehreren Radiallagerreihen) verwendet werden können. Der genaue Aufbau des Lagers 16 hängt von der jeweiligen Vorrichtung sowie den auftretenden Belastungen und Arbeitsanforderungen ab.

Das Lager 16 ist insbesondere nicht direkt mit der Schleifringanordnung 20 verbunden, sondern die Lagerkomponenten 161, 162 sind direkt und fest (und somit rotationsstarr) mit Ober- und Unterwagen 12, 14 verbunden. Eine Verbindung zwischen Rotor 17 und Oberwagen 14 über Mitnehmer entfällt.

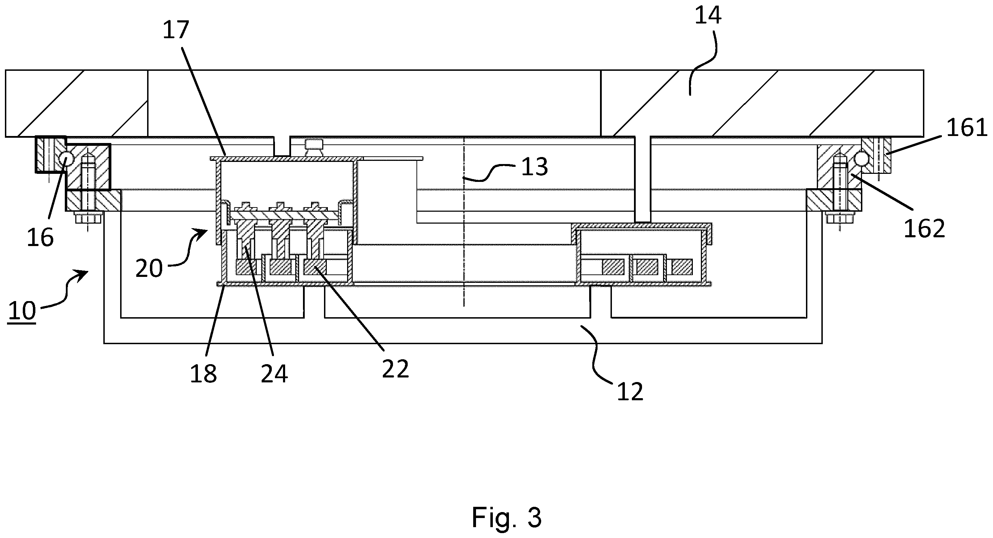

Eine weitere Möglichkeit zur Reduktion der Bauhöhe ist anhand eines zweiten Ausführungsbeispiels der erfindungsgemäßen Vorrichtung in der Figur 3 dargestellt. Diese Ausführungsform unterscheidet sich von derjenigen der Figur 2 dadurch, dass die Leiterbahnen 22 der Schleifringanordnung 20 nicht untereinander (d.h. entlang der Rotationsachse 13), sondern radial nebeneinander (d.h. quer zur Rotationsachse 13) angeordnet sind. Sie liegen insbesondere in einer gemeinsamen Ebene (alternativ können die Leiterbahnen aber z. B. auch abwechselnd in zwei Ebenen angeordnet sein), die die Rotationsachse 13 senkrecht schneidet. Entsprechend sitzen die Schleifkontakte 24 ebenfalls radial nebeneinander in einer gemeinsamen Ebene. Dies ermöglicht eine einfachere und schonendere Montage, da die Schleifkontakte 24 nachträglich nach dem Zusammenführen von Ober- und Unterwagen 14, 12 vom Oberwagen 14 aus eingebaut und/oder eingestellt werden können.

Darüber hinaus sind bei dem Ausführungsbeispiel der Figur 3 im Vergleich zum vorherigen Ausführungsbeispiel die Leiterbahnen 22 im Stator 18 und die Schleifkontakte 24 im Rotor 17 angeordnet (der umgekehrte Fall ist selbstverständlich ebenfalls möglich). Ansonsten besitzt das Ausführungsbeispiel gemäß Figur 3 die übrigen Merkmale der Vorrichtung gemäß Figur 2, d.h. insbesondere ist auch bei der Ausführungsform gemäß Figur 3 das einzige Lager 16 der Drehverbindung radial außerhalb der Schleifringanordnung 20 angeordnet und lagert jeweils sowohl Ober- und Unterwagen 12, 14 als auch Rotor 17 und Stator 18 zueinander. In Kombination mit der horizontalen Anordnung der Leiterbahn-Schleifkontakt-Paare 22, 24 ergibt sich dadurch eine nochmals reduzierte Bauhöhe der Schleifringanordnung 20 parallel zur Rotationsachse 13.

Die Drehverbindungen 10 gemäß Fig. 2 und 3 können eine zusätzliche hydraulische Drehdurchführung aufweisen, wobei die Hydraulikanschlüsse zum Anschließen entsprechender Hydraulikleitungen an einer Unterseite der Drehverbindung 10 bzw. vorzugsweise unterhalb der Schleifringanordnung 20 angeordnet sein können.

Durch die geringere Bauhöhe der Schleifringanordnung 20 der erfindungsgemäßen Vorrichtung besteht unterhalb der Drehdurchführung im Unterwagen 12 ausreichend Platz für Komponenten wie z.B. einen Fahrantriebsmotor mit Achsverteilergetriebe. Dadurch müssen diese Komponenten nicht im Unterwagen 12 nach unten versetzt werden, was zu Lasten des Rampenwinkels (Bodenfreiheit) gehen würde.

Die erfindungsgemäße Drehverbindung 10 eignet sich daher besonders für den Einsatz in mobilen Arbeitsmaschinen mit fahrbarem Unterwagen (Hydraulikbagger, fahrbare Tiefbaugeräte, Mobilkrane etc.).

### Bezugszeichenliste:

- 1: Drehverbindung (Stand der Technik)
- 2: Schleifringanordnung
- 3: Leiterbahn
- 4: Schleifkontakt
- 5: Trennstelle
- 6: Lager
- 7: Rotor
- 8: Stator
- 9: Dichtung
- 10: Drehverbindung
- 12: Unterkonstruktion
- 13: Rotationsachse
- 14: Oberkonstruktion
- 16: Lager
- 17: Rotor
- 18: Stator
- 20: Schleifringanordnung
- 22: Leiterbahn
- 24: Schleifkontakt
- 161: Erste Lagerkomponente
- 162: Zweite Lagerkomponente

## Patentansprüche

1. Vorrichtung umfassend eine Drehverbindung (10), eine Unterkonstruktion (12) und eine über die Drehverbindung (10) um eine Rotationsachse (13) drehbar mit der Unterkonstruktion (12) verbundene Oberkonstruktion (14), wobei die Drehverbindung (10) eine Schleifringanordnung (20) mit einem Rotor (17) und einem Stator (18) zum Übertragen von elektrischer Energie und/oder elektrischen Signalen umfasst und wobei die Unterkonstruktion (12) und die Oberkonstruktion (14) jeweils mindestens eine elektrische Komponente umfassen, welche über die Schleifringanordnung (20) elektrisch miteinander verbunden sind, **dadurch gekennzeichnet,**
**dass** die Führung und Lagerung von Rotor (17) und Stator (18) zueinander über ein Lager (16) der Drehverbindung (10) erfolgt, welches außerhalb der Schleifringanordnung (20) angeordnet ist.

2. Vorrichtung nach Anspruch 1, wobei das Lager (16) in Bezug auf die Rotationsachse (13) radial außerhalb der Schleifringanordnung (20) angeordnet ist und vorzugsweise die Schleifringanordnung (20) umgibt.

3. Vorrichtung nach Anspruch 1 oder 2, wobei die Drehverbindung (10) einen Drehkranz, insbesondere Kugeldrehkranz, umfasst, welcher das Lager (16) bildet, wobei das Lager (16) vorzugsweise ein mit der Oberkonstruktion (14) verbundenes erstes Lagerteil (161) und ein mit der Unterkonstruktion (12) verbundenes zweites Lagerteil (162) umfasst, welche insbesondere nicht direkt mit Rotor (17) und Stator (18) der Schleifringanordnung (20) verbunden sind.

4. Vorrichtung nach einem der vorhergehenden Ansprüche, wobei die Schleifringanordnung (20) kein eigenes Lager umfasst und/oder die Drehverbindung (10) abgesehen von dem außerhalb der Schleifringanordnung (20) angeordneten Lager (16) kein weiteres Lager umfasst.

5. Vorrichtung nach einem der vorhergehenden Ansprüche, wobei der Rotor (17) mit der Oberkonstruktion (14) und der Stator (18) mit der Unterkonstruktion (12) verbunden ist, wobei vorzugsweise der Rotor (17) fest mit der Oberkonstruktion (14) und/oder der Stator (18) fest mit der Unterkonstruktion (12) verbunden ist.

6. Vorrichtung nach einem der vorhergehenden Ansprüche, wobei der Rotor (17) oder der Stator (18) mindestens zwei, vorzugsweise drei Leiterbahnen (22) umfasst, welche jeweils von einem Schleifkontakt (24) des Stators (18) / Rotors (17) kontaktiert werden und durch den Kontakt eine elektrische Verbindung herstellen, wobei die Schleifkontakte (24) vorzugsweise über Federeinrichtungen gegen die Leiterbahnen (22) vorgespannt sind.

7. Vorrichtung nach dem vorhergehenden Anspruch, wobei mindestens zwei Leiterbahnen (22) in Bezug auf die Rotationsachse (13) radial nebeneinander angeordnet sind und vorzugsweise in einer gemeinsamen Ebene liegen.

8. Vorrichtung nach einem der vorhergehenden Ansprüche, wobei die Drehverbindung (10) mindestens eine hydraulische Drehdurchführung umfasst, durch welche Hydraulikfluid von der Oberkonstruktion (14) in die Unterkonstruktion (12) und/oder umgekehrt strömen kann, wobei die Drehverbindung (10) vorzugsweise mindestens einen Hydraulikanschluss umfasst, welcher insbesondere an einer der Unterkonstruktion (12) zugewandten Seite der Drehverbindung (10) angeordnet ist.

9. Vorrichtung nach einem der vorhergehenden Ansprüche, ferner umfassend mindestens eine in der Unterkonstruktion (12) und/oder in der Oberkonstruktion (14) angeordnete Energiequelle, deren erzeugte Energie über die Schleifringanordnung (20) übertragbar ist, wobei die Energiequelle vorzugsweise einen Verbrennungsmotor mit nachgeschaltetem Generator und/oder eine Brennstoffzelle und/oder einen Anschluss für eine externe Energiequelle umfasst.

10. Vorrichtung nach einem der vorhergehenden Ansprüche, ferner umfassend mindestens einen in der Unterkonstruktion (12) und/oder in der Oberkonstruktion (14) angeordneten Energiespeicher, welchem elektrische Energie über die Schleifringanordnung (20) bereitstellbar ist, und/oder ferner umfassend ein Gleichspannungsversorgungsnetz, welches sich über die Schleifringanordnung (20) zwischen Unter- und Oberkonstruktion (12, 14) erstreckt.

11. Vorrichtung nach einem der vorhergehenden Ansprüche, wobei die Drehverbindung (10) einen insbesondere hydraulischen Drehantrieb umfasst, mittels welchem die Oberkonstruktion (14) relativ zur Unterkonstruktion (12) aktiv drehbar ist, wobei der Drehantrieb vorzugsweise elektrisch oder hydraulisch über die Drehverbindung (10) versorgt wird.

12. Vorrichtung nach einem der vorhergehenden Ansprüche, wobei es sich bei der Vorrichtung um eine Arbeitsmaschine handelt, wobei die Rotationsachse (13) vorzugsweise vertikal ausgerichtet ist.

13. Vorrichtung nach dem vorhergehenden Anspruch, wobei es sich bei der Vorrichtung um eine mobile Arbeitsmaschine, insbesondere einen Mobilkran, einen Bagger oder ein Tiefbaugerät, handelt, wobei die Unterkonstruktion (12) als fahrbarer Unterwagen und die Oberkonstruktion (14) als Oberwagen mit einer daran befestigten Arbeitsausrüstung, insbesondere einem Ausleger, einem Mast oder einem Baggerstil, ausgebildet ist.

14. Vorrichtung nach dem vorhergehenden Anspruch, wobei der Unterwagen (12) einen Fahrmotor und vorzugsweise ein Achsverteilergetriebe umfasst, wobei der Fahrmotor und/oder das Achsverteilergetriebe unterhalb der Drehverbindung (10) angeordnet ist.

15. Vorrichtung nach einem der Ansprüche 1 bis 11, wobei es sich bei der Vorrichtung um eine Windkraftanlage handelt, wobei die Oberkonstruktion (14) als Gondel und die Unterkonstruktion (12) als Turm ausgebildet sind.
